Europäisches Patentamt

European Patent Office

Office européen des brevets

(19)

(11) Veröffentlichungsnummer: **0 162 964**
**B1**

(12) **EUROPÄISCHE PATENTSCHRIFT**

(45) Veröffentlichungstag der Patentschrift: **11.07.90**

(51) Int. Cl.⁵: **B 01 D 67/00**

(21) Anmeldenummer: **84115827.2**

(22) Anmeldetag: **19.12.84**

(54) **Verfahren zur Herstellung einer integralasymmetrischen Membran.**

(30) Priorität: **01.06.84 DE 3420373**

(43) Veröffentlichungstag der Anmeldung:
**04.12.85 Patentblatt 85/49**

(45) Bekanntmachung des Hinweises auf die
Patenterteilung:
**11.07.90 Patentblatt 90/28**

(84) Benannte Vertragsstaaten:
**DE FR GB NL**

(56) Entgegenhaltungen:
**EP-A-0 113 574**
**EP-A-0 133 574**
**DE-A-3 018 540**
**US-A-4 156 597**

(73) Patentinhaber: **GKSS-Forschungszentrum**
**Geesthacht GmbH**
**Max-Planck-Strasse**
**D-2054 Geesthacht (DE)**

(72) Erfinder: **Peinemann, Klaus-Viktor**
**Elbstrasse 111**
**D-2058 Lauenburg (DE)**

(74) Vertreter: **Schöning, Hans-Werner, Dipl.-Ing.**
**Patentanwälte Niedmers & Schöning**
**Jessenstrasse 4**
**D-2000 Hamburg 50 (DE)**

EP 0 162 964 B1

Courier Press, Leamington Spa, England.

# EP 0 162 964 B1

**Beschreibung**

Die Erfindung betrifft ein Verfahren zur Herstellung einer Membran zur Trennung von Gasen voreinander, bei dem ein Polyetherimid für die Ausbildung einer Membran mit einem halogenierten Kohlenwasserstoff als Lösungsmittel und einem Quellmittel gemischt, flächenhaft ausgebreitet und mit einem Fällmittel in Kontakt gebracht wird.

Ein Verfahren zur Herstellung einem Membran, bei dem ein Polyetherimid mit einem Lösungsmittel und, gegebenenfalls, einem Quellmittel mit einem Fällmittel in Kontakt gebracht wird, ist aus EP—A—0.113.574 (Stand der Technik gemäß Art, 54(3) EPÜ) bekannt.

Allgemein gilt, daß der Fluß einer bevorzugt permeierenden Komponente durch eine Membran groß ausgebildet sein soll. Je größer der Fluß pro Flächeneinheit und Zeiteinheit ist, um so wirtschaftlicher kann mit der Membran eine Stofftrennung erfolgen. Da der Fluß durch eine Membran im allgemeinen umgekehrt proportional zu ihrer Dicke ist, versucht man die Dicke einer Membran möglichst klein zu halten. Bei der Herstellung sehr dünner Membranen wird schnell die Grenze der Realisierbarkeit erreicht, da dünne folienartige Membranen mit einer Dicke von $10^{-3}$ mm oder kleiner schwer handhabbar und auch nicht mehr fehlstellenfrei herstellbar sind. Schon Mikroporen in einer Größenordnung von $10^{-5}$ mm haben für die Selektivität einer Gastrennmembran verheerende Auswirkungen.

Ein Möglichkeit zur Behebung dieser Schwierigkeiten liegt in der Herstellung sogenannter integralasymetrischer Membranen. Solche Membranen bestehen aus einem porösen voluminösen Unterbau und einer sehr dünnen Haut ($10^{-4}$—$10^{-3}$ mm), die die eigentliche trennende Membran darstellt. Bei einer integralasymetrischen Membran besteht jedoch die Haut und der Unterbau aus demselben Material, nämlich bisher Zelluloseacetat, wobei die integralasymetrische Membran praktisch in einem Arbeitsgang hergestellt wird.

Integralasymmetrische Membranen konnten aufgrund dieser Eigenschaften erstmals für die Entsalzung von Meerwasser nach dem Prinzip der umgekehrten Osmose wirtschaftlich eingesetzt werden. Es wurde in der Folgezeit vielfach versucht, solche integralasymetrischen Membranen herzustellen, die auch für die Gastrennung verwendbar sind. Wie schon bei der Fertigung sehr dünner filmartiger Membranen stellte sich auch dabei heraus, daß es in der Regel nicht möglich war, die Membranhaut mikroporenfrei zu gestalten. Die enzige porenfreie integralasymmetrische Membran, die für die Gastrennung eine gewisse wirtschaftliche Bedeutung erlangt hat, ist eine, wie schon erwähnt, getrocknete Zelluloseacetatmembran, welche für die Meerwasserentsalzung entwickelt worden war. Nachteilig bei dieser bekannten getrockneten Zelluloseacetmembran ist, daß der Trocknungsprozeß für die zunächst wasserfreie Membran einen aufwendigen Lösungsmittelaustausch umfaßt. Wird die nasse Zelluloseacetatmembran direkt an der Luft getrocknet, so kollabiert der poröse Unterbau und die Folge ist eine nahezu gasundurchlässige Membran.

Ein weiterer Nachteil dieser fertigen Membranen besteht in ihrere außerordentlichen Wasserempfindlichkeit. Durch flüssiges Wasser werden sie irreversibel zerstört. Weiterhin können die Zelluloseacetmembranen nicht bei höheren Temperaturen (T>70°C) eingesetzt werden, da durch Materialveränderungen dann die Selektivität stark abnimmt. Für Zelluloseacetat liegt die maximal erreichbare He/$N_2$ Selektivität bei ca. 85 (Durchschnittswert ca. 60).

Es ist Aufgabe der vorliegenden Erfindung ein Verfahren der eingangs genannten Art derart zu gestalten, daß aus einem geeigneten Polymer integralasymetrische Membranen mit einer dünnen porenfreien Haut entstehen, die eine hohe Selektivität aufweisen, wasserunempfindlich und bei höherer Temperatur einsetzbar sind und deren Fertigung insbesondere bei Fällungs- und Trocknungsmaßnahmen relativ einfach wird.

Gelöst wird die Aufgabe gemäß der Erfindung dadurch, daß bei der als integralasymetrische Membran ausgebildeten Membran als Quellmittel alkylsubstituierter Benzol verwendet wird.

Die Ansprüche 2 bis 9 geben vorteilhafte Weiterbildungen und Ausführungsformen der Erfindung sowie Membranformen wieder.

Gemäß der Erfindung wurde demnach in besonders vorteilhafter Weise mit dem handelsüblichen Kunststoff Polyetherimid ein Polymer mit sehr guten Selektivitätseigenschaften für die Trennung leichter Gase wie Helium und Wasserstoff von schwereren Gasen wie Stickstoff, Methan und Kohlenmonoxid ausgewählt. Es hatte sich gezeigt, daß mit bekannten Techniken hergestellten dünnen Folien auch aus diesem Kunststoff nicht als Gastrennmembran geeignet sind. Solcherart gefertigte, ca. 5 μm dicke Folien ermöglichen nur einen Helium-Fluß von $1{,}3 \cdot 10^{-4}$ m³/m²h bar. Dieser Fluß ist viel zu gering, um eine wirtschaftliche Gastrennung durchführen zu können.

Erfindungsgemäß wurde daher eine asymmetrische Gastrennmembran mit nahezu porenfreier Haut (ca. 0,2 μm dick) gefertigt, indem eine Lösung von Polyetherimid in einem Lösungsmittelsystem hergestellt wird, welches ein flüchtiges echtes Lösungsmittel für das Polymer und außerdem mindestens ein Nichtlösungsmittel, das als porenbildendes Medium wirkt, enthält. Diese Gießlösung wird zu einem dünnen Film ausgestrichen, der Anschließend in einer organischen Flüssigkeit (Nichtlösungsmittel für Polyetherimid) ausgefällt wird. Die gefällte Membran kann dann an der Luft getrocknet werden. Sie ist jetzt als Gastrennmembran mit guter Selektivität und gutem Fluß einsetzbar. Die Selektivität der Membran kann aber auch noch erheblich dadurch gesteigert werden, wenn ihre Oberfläche mit einem dünnen Silikonfilm überzogen wird. Die erfindungsgemäße Membran ist allen zur Zeit existierenden Gastrennmembranen bezüglich Selektivität und Fluß überlegen, insbesondere wenn es sich um die Trennung leichter Gase wie Helium und Wasserstoff von Gasen wie Stickstoff, Methan und Kohlenwassermonoxid handelt.

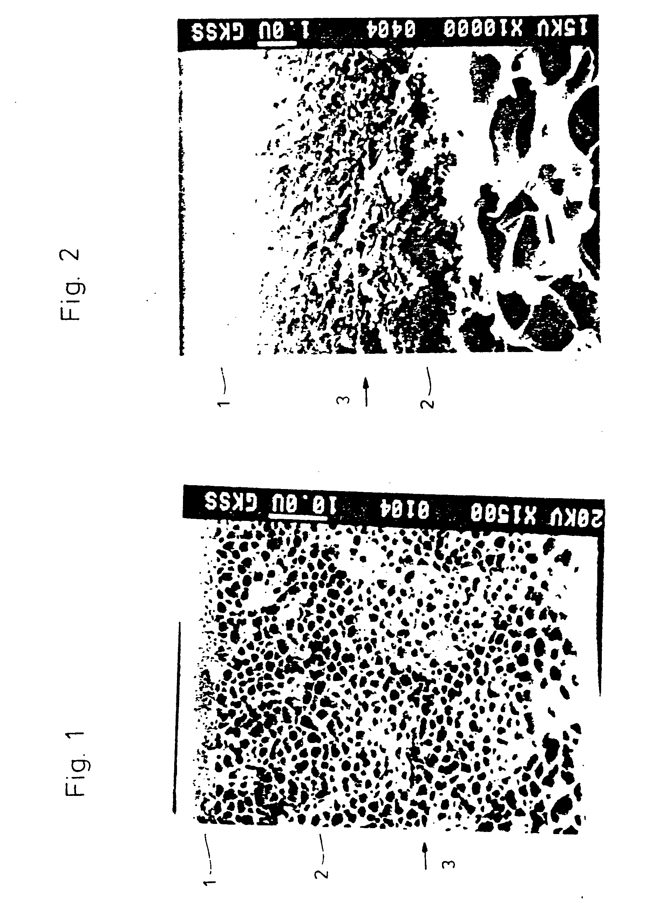

Die Erfindung wird im folgenden anhand von zwei Figuren 1 und 2 sowie Ausführungsbeispielen näher erläutert.

Die Herstellung einer asymmetrischen Membran 3 mit gaswirksamer Oberfläche 1 und Stützstruktur 2 (s. Fig. 1 und 2) beginnt mit der Erstellung einer Gießlösung. Diese besteht grundsätzlich aus dem Polymer, einem Lösungsmittel, mindestens einem Quellmittel und/oder einem Nichtlösungsmittel. Das Lösungsmittel dient selbstverständlich dazu, das Polymer in Lösung zu bringen; das Lösungsmittel sollte eine überschüssige Lösungskapazität haben, d.h. es soll nicht nur das Polymer aufnehmen können, sondern auch die übrigen Bestandteile des Lösungssystems. Wie aus den folgenden Erläuterungen zu erkennen sein wird, sollte das Lösungsmittel auch einen niedrigeren Siedepunkt haben als die übrigen Lösungsbestandteile. Das Quellmittel (Nichtlösungsmittel) dient dazu, einen porösen Unterbau zu schaffen. Die Porosität ist direkt und die Dicke der Haut indirekt proportional zur Konzentration des Quellmittels (Nichtlösungsmittels) in der Gießlösung. Es gibt allerdings eine Obergrenze der Quellmittelkonzentration, von der ab keine porenfreie Haut mehr gebildet werden kann. Fehlt das Quellmittel auf der anderen Seite ganz, so wird normalerweise kein aysmmetrischer Film gebildet, sondern es resultiert eine dichte homogene Membran.

Aus einem gegebenen Polymer können also durch Variationen von Lösungsmitteln, Quellmitteln und Nichtlösungsmitteln sehr unterschiedliche Membranen gefertigt werden. Eine richtig zusammengesetzte Gießlösung ist allerdings nur eine notwendige aber keine hinreichende Bedingung für eine Membran 3 mit gutem Fluß und guter Selektivität.

Auch die Dynamik des Prozesses, der nach dem Ausstreichen der klaren Gießlösung zu einem Film folgt, ist sehr wesentlich für die Membraneigenschaften. Sowie die Gießlösung ausgestrichen ist, beginnt das leichtflüchtige Lösungsmittel zu verdampfen. Weil die Verdampfung an der Grenzfläche Lösung/Luft/ sehr (Inertgas) viel schneller vonstatten geht als die Diffusion des Lösungsmittels in der Lösung, wird die Polymerlösung an der Luftoberfläche schnell konzentrierter als im übrigen Film. Außerdem wird der Anstieg der Polymerkonzentration an der Grenzfläche Lösung/Luft auch durch die Oberflächenaktivität des Polymers hervorgerufen. Die Polymerkonzentration an der Oberfläche wird bald so groß, daß das Polymer ausfällt und die Oberflächenbaut 1 bildet.

Die Unterstruktur 2 der Membran 3 bildet sich in folgender Weise: Nachdem die Haut 1 gebildet ist, wird die Geschwindigkeit der Lösungsmittelverdampfung und damit die Polymerausfällung erheblich verringert und die Gelierung der Unterstruktur 2 erfolgt viel langsamer als die der Haut 1. Infolge der höheren Flüchtigkeit des Lösungsmittels erhöht sich im Innern der Membran 3 die Konzentration an Quellmittel. Es tritt eine Zweiphasenbildung auf und das Quellmittel bildet kleine dispergierte Tröpfchen. Wegen ihrer Oberflächenaktivität reichern sich die Polymermoleküle an der Oberfläche dieser Tröpfchen an. Je mehr Lösungsmittel verdampft, umso ausgeprägter wird dieser Vorgang und umso dichter rücken die polymerüberzogenen Quellmitteltröpfchen zusammen. Wird der Film zu diesem Zeitpunkt in ein Fällbad getaucht, wird der so vorgebildete Zustand sozusagen fixiert. Quellmittel und restliches Lösungsmittel diffundieren durch die Haut in das Fällbad, Fällmittel diffundiert in die Membran 3 und überführt das Polymer vollständig in die feste Phase. Je nach dem Fällzeitpunkt und der Kinetik des Fällvorganges entsteht im Membraninneren eine geschlossene oder eine offene Zellstruktur.

Fig. 1 zeigt z.B. die Aufnahme einer Polyetherimidmembran 3, die in Toluol gefällt wurde. Toluol diffundiert langsam in die Membran, das Lösungsmittel diffundiert vergleichsweise schnell in das Fällbad. Die Folge ist die Bildung einer geschlossenen Porenstruktur, d.h. die einzelnen Schwammbläschen sind von einer geschlossenen Polymerhaut umgeben. Eine solche Schwammstruktur reduziert den Gasdurchfluß noch deutlich. Fig. 2 zeigt die Aufnahme einer Polyetherimidmembran 3, die in Aceton gefällt wurde. Aceton führt zu einer schnellen Ausfällung der Membran. Es resultiert daher eine offene Zellstruktur, die dem Gasdurchfluß nur einen kleinen Widerstand entgegensetzt und daher Vorteile besitzt.

Die Herstellung der Polyetherimidmembran 3 ist vergleichsweise einfach. Eine Lösung von Polyetherimid wird zu einem Film ausgestrichen, der dann in einer organischen Flüssigkeit ausgefällt wird. Der Film wird anschließend an der Luft getrocknet. Die fertige Membran kann so verwendet werden oder sie kann zur Selektivitätssteigerung mit einem dünnen Silikonüberzug versehen werden.

Die Gießlösung besteht aus Polyetherimid, mindestens einem Lösungsmittel und mindestens einem porenbildenden Stoff, der ein Nichtlösungsmittel für Polyetherimid (PEI) ist.

Das verwendete Polyetherimid kann ein handelsüblicher Kunststoff ("Ultem", Produktbezeichnung der Firma General Elektric) sein. Auch andere strukturell verwandte Polyetherimide sind einsetzbar, wenn sie in einem der im folgenden genannten Lösungsmittel löslich sind. Der PEI-Gehalt der Gießlösung kann zwischen 12 und 28 Gew.-% liegen.

Als Lösungsmittel können partiell halogenierte Kohlenwasserstoffe verwendet werden, unter diesen besonders Dichlormethan, 1,1,2-Trichlorethan und 1,1,2,2-Tetrachlorethan.

Außerdem muß die Gießlösung mindestens einen porenbildenden Stoff (Quellmittel) enthalten, der ein Nichtlösemittel für PEI sein soll. Das Quellmittel darf nicht mit dem PEI oder dem Lösungsmittel reagieren, und sollte einen Siedepunkt haben, der mindestens 30°C über dem des Hauptlösungsmittels liegt. Als Quellmittel können verwendet werden:

Carbonsäuren, besonders Ameisensäure und Eissigsäure; Alkylbenzole, besonders Toluol und Xylol;

EP 0 162 964 B1

chlorierte Kohlenwasserstoffe, die Nichtlösungmittel für PEI sind, besonders Trichlorethylen. Die Quellmittelkonzentration kann zwischen 5 und 40 Gew.-% liegen. Sie sollte möglichst hoch gewählt werden, da die Porosität des Membranunterbaus 2 mit dem Quellmittelgehalt zunimmt und die Dicke der Membranhaut 1 abnimmt. Allerdings gibt es eine Obergrenze im Quellmittelgehalt, oberhalb derer keine dichte Haut 1 mehr gebildet wird.

Als Membranfällmittel kommen alle organischen Flüssigkeiten in Betracht, die Nichtlösemittel für PEI sind, die aber mit allen anderen Bestandteilen der Gießlösung vollständig mischbar sind. Durch das Fällmittel kann die Porenstruktur und die Dicke der Membranhaut 1 beeinflußt werden. Als besonders günstiges Fällmittel hat sich Aceton herausgestellt.

Die Herstellung asymmetrischer PEI-Membranen 3 der beschriebenen Art ist nicht an ein bestimmtes Modulkonzept gebunden. Es können Membranen für den Platten-, Rohr- und Wickelmodul und außerdem Hohlfasern gefertigt werden. Für einige Modulkonzepte ist es von Vorteil, daß die Membranen verschweißt werden können.

Die Membranen 3 können direkt auf ein Stützmaterial gegossen oder ohne Stützschicht hergestellt und später auf eine solche gebracht werden. Werden die Membranen nicht auf ein Stützmaterial gezogen, so sollte die Gießlösung zu einem Film von 250—400 µm ausgezogen werden. Die fertige Membran hat dann eine Dicke von 100—160 µm. Der Gasfluß durch die Membran ist kaum von der Gesamtdicke abhängig, da nur die Haut den eigentlichen Widerstand bildet.

Beispiel 1

Nach der folgenden Rezepteur wurde eine Gießlösung angesetzt:

| Polyetherimid | 15,9 Gew.-% |
| Dichloromethan | 54,6 „ |
| 1,1,2,2-Tetrachlorethan | 4,8 „ |
| Xylol | 17,6 „ |
| Essigsäure | 7,1 „ |

Die klare Geißlösung wird bei 18°C auf Glasplatten zu einem Film von 375 µ ausgezogen und nach kurzer Abdampfzeit (ca. 3s) der Film in einem Acetonbad von 16°C ausgefällt. Die Ausfällzeit beträgt 30 min. Anschließend erfolgt eine Trocknung an der Luft. Ein Teil der Membranen wurde zunächst mit den reinen Gasen Wasserstoff, Helium und Stickstoff bei 5 bar auf ihre Permeabilität untersucht. Der andere Teil der Membranen wurde dahingegen vor dem Test mit einem dünnen Silikonfilm (ca. 0,5 µm) überzogen. Hierzu erfolgte eine Verschweißung der Membranen zu Kissen (Haut außen). Diese Kissen wurden kurz in eine verdünnte Silikonlösung mit Vernetzer getaucht. Nach Aushärtung des Silikons wurden die Kissen wieder auseinander geschnitten. Tabelle 1 zeigt die Ergebnisse im Vergleich.

TABELLE 1

| | Permeabilitäten m³/m² h bar | | | Selektivitäten | |
|---|---|---|---|---|---|
| | $H_2$ | He | $N_2$ | $\alpha_{N_2}^{N_2}$ | $\alpha_{N_2}^{He}$ |
| PEI-Membran ohne Silik. | 0,201 | 0,282 | 0,004 | 50 | 71 |
| PEI-Membran mit Silik. Test bei 20°C | 0,192 | 0,250 | 0,0017 | 113 | 144 |
| Test bei 80°C | — | 0,765 | 0,0067 | — | 114 |

Die Ergebnisse zeigen, daß sich durch den Silikonüberzug eine erhebliche Selektivitätszunahme erreichen läßt. Da Silikon selbst nur eine sehr kleine Selektivität aufweist (ca. 2,5), kann diese Zunahme nur durch ein Blockieren noch vorhandener Mikroporen erklärt werden.

Weiterhin ist zu erkennen, daß sich der Helium-Fluß durch Temperaturerhöhung von 20° auf 80°C ca. verdreifachen läßt. Die Selektivität nimmt zwar ab. behält aber immer noch ausgezeichnete Werte.

Die silikonbeschichtete Membran wurde auch mit He/$N_2$-Gasgemischen bei 20 bar getestet. In einer einstufigen Permeation wurde z.B. der Helium-Anteil von 79,7% auf 99,8% erhöht.

4

# EP 0 162 964 B1

Beispiel 2

Die folgenden Fälle zeigen anhand von Beispielen die Wirkung, die durch Variationen von Quellmittel und Fällmedium hervorgerufen wird.

### Lösung A

| | |
|---|---|
| Polyetherimid | 15,9 Gew-% |
| Dichlormethan | 54,6 „ |
| 1,1,2,2-Tetrachlorethan | 4,8 „ |
| Xylol | 17,6 „ |
| Essigsäure<br>Acetonfällung | 7,1 „ |

### Lösung B

wie A, aber Toluolfällung

### Lösung C

| | |
|---|---|
| Polyetherimid | 19,4 Gew.-% |
| Dichlormethan | 66,9 „ |
| 1,1,2-Trichlorethan | 5,9 „ |
| Xylol | 3,9 „ |
| Essigsäure<br>Acetonfällung | 3,9 „ |

### Lösung D

| | |
|---|---|
| Polyetherimid | 20 Gew.-% |
| Dichlormethan | 42,9 „ |
| 1,1,2-Trichlorethan | 3,8 „ |
| Trichlorethylen | 32 „ |
| Essigsäure<br>Acetonfällung | 1,3 „ |

Alle Membranen wurden mit Silikon beschichtet und getestet wie unter Beispiel 1 (bei 20°C). Tabelle 2 zeigt die Ergebnisse für die Lösungen A—D.

### TABELLE 2

| Lösung | Heliumpermeabilität $m^3/m^2$ h bar | Selektivität $\alpha_{N_2}^{He}$ |
|---|---|---|
| A | 0,250 | 144 |
| B | 0,003 | 220 |
| C | 0,04 | 180 |
| D | 0,07 | 168 |

Der Vergleich der Daten von Lösung A und B zeigt den erheblichen Einfluß des Fällmittels auf die Membraneigenschaften. Membran B hat im Unterschied zu Membran A eine geschlossene Zellstruktur und eine etwas dickere Haut; es resultiert eine drastische Flußabnahme.

In der Gießlösung C wurde der Quellmittelgehalt verringert. Wie bereits ausgeführt, sinkt die Porosität, und die Dicke der Membranhaut nimmt zu. Auch hier resultiert eine Flußabnahme. Dasgleiche gilt für Lösung D, obwohl hier der Quellmittelanteil sehr hoch war. Es handelt sich aber hier um das Quellmittel Trichlorethylen. Trichlorethylen ist zwar kein Lösungsmittel für PEI, hat jedoch eine starke Affinität zu diesem Polymer. Als Folge hiervon und auch infolge des relativ niedrigen Siedepunktes wird auch ihrer eine geringe Porosität und eine dickere Membranhaut 1 erhalten.

Die erfindungsgemäße Membran ist besonders dafür geeignet, Helium aus Tauchgasen wiederzugewinnen, die im Tieftauchhabitaten anfallen.

## Patentansprüche

1. Verfahren zur Herstellung einer integralasymmetrischen Membran zur Trennung von Gasen voneinander, bei dem ein Polyetherimid für die Ausbildung einer Membran mit einem halogenierten Kohlenwasserstoff als Lösungsmittel und einem alkylsubstituierten Benzol als Quellmittel gemischt, flächenhaft ausgebreitet und mit einem Fällmittel in Kontakt gebracht wird.

2. Verfahren nach Anspruch 1, wobei dem Quellmittel eine aliphatische Carbonsäure zugesetzt wird.

3. Verfahren nach einem oder beiden der Ansprüche 1 oder 2, wobei dem Quellmittel ein chlorierter Kohlenwasserstoff zugesetzt wird.

4. Verfahren nach einem oder mehreren der Ansprüche 1 bis 3, wobei die zusammengemischte, zu einem Film ausgestrichene Lösung in einer organischen Flüssigkeit ausgefällt und anschließend in Luft oder in einem inerten Gas getrocknet wird.

5. Verfahren nach einem oder mehreren der Ansprüche 1 bis 4, wobei die fertige Membran, insbesondere deren trennwirksame Oberfläche mit einem Elastomer überzogen wird.

6. Verfahren nach einem oder mehreren der Ansprüche 1 bis 5, wobei als Lösungsmittel partiell halogenierte Kohlenwasserstoffe, insbesondere Dichlormethan, 1,1,2-Trichlorethan und 1,1,2,2-Tetrachlorethan, verwendet werden.

7. Verfahren nach einem oder mehreren der Ansprüche 1 bis 6, wobei als Quellmittel nicht mit dem Polyetherimid oder dem Lösungsmittel reagierende Ameisensäure, Essigsäure, Toluol, Xylol oder Trichlorethylen verwendet wird.

8. Verfahren nach Anspruch 7, wobei die Konzentration des Quellmittels zwischen 5 und 40 Gew.-% ausgewählt wird.

9. Verfahren nach einem oder mehreren der Ansprüche 1 bis 8, wobei als Fällmittel Aceton verwendet wird.

10. Membranen, hergestellt nach einem oder mehreren der Ansprüche 1 bis 9, dadurch gekennzeichnet, daß Sie als Platten-, Rohr- und Wickelmodule oder Hohlfasern ausgebildet sind.

## Revendications

1. Procédé pour la fabrication d'une membrane intégrale asymétrique destinée à séparer des gaz les uns des autres, dans lequel un polyétherimide, destiné à la constitution d'une membrane, est mélangé à un hydrocarbure chloré servant de solvant et à un benzène alkyl-substitué servant d'agent gonflant, est étalé pour donner une structure bidimensionnelle et est mis en contact avec un agent de coagulation.

2. Procédé selon la revendication 1, dans lequel on ajoute à l'agent gonflant un acide carboxylique aliphatique.

3. Procédé selon l'une des revendications 1 ou 2, ou les deux, dans lequel on ajoute à l'agent gonflant un hydrocarbure chloré.

4. Procédé selon l'une ou plusieurs des revendications 1 à 3, dans lequel la solution mélangée, étalée pour donner un film, est coagulée dans un liquide organique puis est séchée à l'aire ou dans un gaz inerte.

5. Procédé selon l'une ou plusieurs des revendications 1 à 4, dans lequel la membrane finie, en particulier sa surface séparatrice, est revêtue d'un élastomère.

6. Procédé selon l'une ou plusieurs des revendications 1 à 5, dans lequel on utilise comme solvant des hydrocarbures partiellement halogénés, en particulier du dichlorométhane, du 1,1,2-trichloroéthane et du 1,1,2,2-tétrachloroéthane.

7. Procédé selon l'une ou plusieurs des revendications 1 à 6, dans lequel on utilise comme agent gonflant des composés ne réagissant pas avec le polyétherimide ou le solvant, comme l'acide formique, l'acide acétique, le toluène, le xylène ou le trichloréthylène.

8. Procédé selon la revendication 7, dans lequel la concentration de l'agent gonflant est choisie entre 5 et 40% en poids.

9. Procédé selon l'une ou plusieurs des revendications 1 à 8, dans lequel l'agent de coagulation utilisé est l'acétone.

10. Membranes fabriquées selon l'une ou plusieurs des revendications 1 à 9, caractérisées en ce qu'elles sont constituées sous forme de modules à plaque, de modules tubulaires et de modules plan spiralés, ou de fibres creuses.

**Claims**

1. Process for the production of an integral-asymmetric membrane for the separation of gases from one another, in which, in order to form a membrane, a polyether imide is mixed with a halogenated hydrocarbon as solvent and an alkyl-substituted benzene as swelling agent, the mixture is spread out horizontally and is brought into contact with a precipitating agent.

2. Process according to Claim 1, wherein an aliphatic carboxylic acid is added to the swelling agent.

3. Process according to one or both of Claims 1 or 2, wherein a chlorinated hydrocarbon is added to the swelling agent.

4. Process according to one or more of Claims 1 to 3, wherein the solution obtained by mixing and spread out to give a film is treated with an organic liquid to precipitate the film, which is subsequently dried in air or in an inert gas.

5. Process according to one or more of Claims 1 to 4, wherein the finished membrane, in particular its surface which effects the separation, is coated with an elastomer.

6. Process according to one or more of Claims 1 to 5, wherein the solvents used are partially halogenated hydrocarbons, in particular dichloromethane, 1,1,2-trichloroethane and 1,1,2,2-tetrachloroethane.

7. Process according to one or more of Claims 1 to 6, wherein the swelling agent used is formic acid, acetic acid, toluene, xylene or trichloroethylene, none of which reacts with the polyether imide or the solvent.

8. Process according to Claim 7, wherein the concentration chosen for the swelling agent is between 5 and 40% by weight.

9. Process according to one or more of Claims 1 to 8, wherein the precipitating agent used is acetone.

10. Membranes produced by one or more of Claims 1 to 9, characterized in that they are in the form of flat, tubular and wound modules or hollow fibres.

Fig. 2

Fig. 1